# FASCICULE DE BREVET EUROPEEN

(11) **EP 0 567 417 B1**
(45) Date de publication et mention de la délivrance du brevet: **03.07.1996**
(21) Numéro de dépôt: 93450001.8
(22) Date de dépôt: 22.04.1993
(51) Int. Cl.: B64G 1/58, B32B 5/22

(54) **Dispositif de protection thermique d'un objet et structure, notamment bouclier thermique, ainsi obtenue**
Wärmeschutzvorrichtung für ein Objekt und eine so erhaltene Struktur, insbesondere ein Hitzeschild
Thermal protection device for an object and structure, particularly a thermal shield, so obtained

(30) Priorité: 23.04.1992 FR 9205260
(43) Date de publication de la demande: 27.10.1993
(73) Titulaire: AEROSPATIALE Société Nationale Industrielle, F-75781 Paris Cédex 16 (FR)
(72) Inventeur: Parrot, Pierre, F-33200 Bordeaux (FR); Herman, Philippe, F-33160 Saint Medard en Jalles (FR); Lalanne, Philippe, F-33000 Bordeaux (FR); Tisne, Jean-Louis, F-33127 Martignas (FR)
(74) Mandataire: Thébault, Jean-Louis

(56) Documents cités:
- US-A- 4 151 800
- US-A- 4 338 368
- US-A- 4 358 480
- US-A- 4 373 003
- US-A- 4 515 847

## Description

La présente invention a trait à la protection thermique en particulier d'objets susceptibles d'affronter des flux thermiques très élevés mais pendant un temps relativement court, tels que des engins spatiaux pénétrant dans des atmosphères de planètes.

C'est ainsi qu'au cours, soit de la rentrée en atmosphère terrestre, soit de la pénétration dans l'atmosphère d'une autre planète, de tels engins, des capsules de rentrée ou des sondes spatiales par exemple, subissent sur leurs surfaces externes des flux thermiques générés par des phénomènes convectifs et/ou radiatifs liés à l'écoulement gazeux à très grande vitesse autour de l'objet pendant la pénétration.

Pour affronter de telles conditions on sait réaliser des protections thermiques à l'aide, soit de matériaux dits "thermo-structuraux" rapportés, par exemple par collage ou par une liaison mécanique, sur l'objet à protéger, soit de structures porteuses spéciales revêtues de matériaux isolants thermiques et/ou ablatifs.

Comme matériaux thermo-structuraux on peut citer par exemple les matériaux composites carbone-carbone tels que ceux cités dans le brevet FR-2.493.304, ou ceux à base de métaux thermo-résistants tels que le Beryllium.

Comme structures porteuses devant être revêtues de matériaux isolants thermiques et/ou ablatifs chargés d'éviter les échauffements excessifs de la structure sous-jacente, on peut citer les structures métalliques ou en matériau composite. Ces structures porteuses sont revêtues de matériaux formés de silicone, armés de fibres minérales, tels que ceux mentionnés dans le brevet FR-2.652.036 déposé au nom de la Demanderesse, ou allégés par la présence de microbilles ou de bulles.

On peut également utiliser, pour le revêtement de telles structures métalliques ou en matériau composite, des matériaux dénommés "carbone/résine" et/ou "silice/résine" comportant des renforts fibreux de carbone ou de silice à très haute tenue en température.

Les diverses solutions rappelées ci-dessus présentent toutes des inconvénients.

Les inconvénients majeurs de la mise en oeuvre des matériaux dits thermo-structuraux sont :
- la difficulté, voire l'impossibilité, de réaliser des pièces monolithiques aux dimensions requises si l'on veut utiliser ces matériaux pour constituer par exemple un bouclier thermique de capsule de rentrée atmosphérique, cette difficulté pouvant néanmoins être palliée par la conception d'un système de liaison entre des pièces élémentaires, tel qu'un collage par exemple ;
- leur coût élevé lié à des cycles de réalisation longs ;
- le risque industriel lié à la longueur de leur cycle de réalisation et à la difficulté, voire l'impossibilité, de réparation en cas de défaut ou de dégradation constatés lors de la fabrication ou de l'utilisation ultérieure, ce point étant particulièrement critique pour le carbone-carbone, notamment dans le cas où l'assemblage des pièces élémentaires de carbone/carbone donne une pièce finale monolithique ;
- les dangers physiologiques liés à la mise en oeuvre du Beryllium, lorsque ce dernier est utilisé.

Quant aux structures revêtues de matériaux isolants et/ou ablatifs, les inconvénients de l'utilisation de silicones armés et/ou allégés, ou de composites silice/résine ou carbone/résine sont :
- la masse totale, structure porteuse plus matériau, résultant de ce type de protection ;
- l'impossibilité, ces matériaux étant étanches, de faire transiter les gaz de vidange au travers de la protection thermique lors du lancement de l'objet dans l'espace, ces gaz devant alors être évacués par un trajet ne traversant pas la protection thermique ;
- l'insuffisance des marges de sécurité au regard des prévisions de flux thermiques rencontrés lors de la pénétration dans l'atmosphère de la planète, ces marges dépendant du taux de dégradation du matériau soumis audit flux.

Par le document US-A-4 338 368 on connaît un matériau du type ci-dessus constitué de tuiles de fibres rigidifiées, rapportées sur une structure porteuse par l'intermédiaire d'un tampon d'isolation et de revêtements de silicone. Toutefois, la face interne des tuiles fait l'objet d'une densification ayant pour conséquence de rendre étanche ladite face. De plus, la face externe des tuiles est également l'objet d'une étanchéification.

La présente invention vise à proposer une structure de protection thermique pour véhicule spatial permettant les échanges gazeux avec l'extérieur, apte à affronter les conditions thermiques susceptibles d'être rencontrées lors de la pénétration dans des atmosphères aussi bien oxydantes que non-oxydantes et, ce, avec un compromis optimal entre la masse de ladite structure de protection et son coût.

L'invention vise également à faciliter et à rendre plus économique la mise en oeuvre d'une structure protectrice thermique sur des objets divers pouvant être de dimensions importantes.

A cet effet, l'invention a pour objet un dispositif de protection thermique d'un objet, en particulier un véhicule spatial, du type comprenant une structure porteuse revêtue d'un matériau isolant thermique sous forme d'éléments monoblocs rapportés sur ladite structure porteuse et constitués de fibres de carbone ou de silice, liées par un liant formé du même constituant et éventuellement d'une résine appropriée, caractérisé en ce que ledit matériau est un agrégat de fibres d'un diamètre inférieur ou égal à 10 micromètres et d'une longueur inférieure ou égale à 700 micromètres, ledit agrégat ayant une densité comprise entre 0,2 environ et 0,5 environ et en ce que lesdits éléments monoblocs sont rapportés sur ladite structure porteuse par l'intermédiaire d'une couche de colle de fixation interposée de manière discontinue entre les faces internes desdits éléments et la surface de la structure porteuse.

Un tel matériau a un taux de porosité particulièrement important, pouvant dépasser 80% en volume, qui permet de prendre en compte les problèmes de dégazage lors de la phase de lancement de l'objet ainsi protégé.

Par ailleurs, ce type de matériau s'adapte aisément, par usinage ou moulage, à la réalisation d'éléments modulaires, du type pavés ou tuiles, permettant le revêtement de la structure porteuse, telle qu'un bouclier thermique de sonde ou de capsule, dans de bonnes conditions. En outre, il a une rigidité suffisante qui garantit la géométrie de la surface externe de tels éléments, en particulier lors de la pénétration dans une atmosphère.

Le choix du matériau en fonction de zones particulières du bouclier et/ou en fonction des conditions de pénétration dans l'atmosphère et de la nature de cette dernière, ajoute encore à la souplesse de mise en oeuvre de la structure selon l'invention. C'est ainsi par exemple que pour un bouclier devant affronter une atmosphère oxydante, on utilisera un agrégat de silice, alors que pour une atmosphère non-oxydante, on pourra utiliser également un agrégat de carbone.

Dans tous les cas, du fait de la tendance à l'effritement de ces types de matériaux, la face exposée du matériau fera avantageusement l'objet d'un traitement anti-effritement, par exemple sous la forme d'un revêtement d'un film protecteur en matière plastique, à la manière connue.

Le fait d'utiliser des agrégats d'une densité inférieure à 0,5 environ permet de réaliser des structures protectrices sensiblement plus légères que les structures revêtues de matériaux isolants thermiques et/ou ablatifs mentionnées plus haut et bien moins onéreuses du fait de la facilité d'usinage des éléments modulaires monoblocs selon l'invention et de mise en place.

Cette dernière est effectuée de manière particulièrement aisée par simple collage, à la manière connue, avec des colles à base de silicones, les pavés ou tuiles, en cas de réalisation d'un revêtement en mosaïque, étant placés côté à côte avec interposition d'un joint de colle du même type que ci-dessus, entre les pavés ou tuiles.

D'autres caractéristiques et avantages ressortiront de la description qui va suivre de modes de réalisation du dispositif de l'invention, description donnée à titre d'exemple uniquement et en regard des dessins annexés sur lesquels :
- La figure 1 représente schématiquement en coupe transversale, en partie gauche, une structure porteuse munie d'un revêtement selon l'invention et, en partie droite, la même structure porteuse munie d'un revêtement selon une variante ;
- La figure 2 illustre un mode de fixation complémentaire du revêtement de la figure 1 sur la structure porteuse, et
- La figure 3 est une vue en coupe suivant la ligne III-III du dispositif de la figure 2.

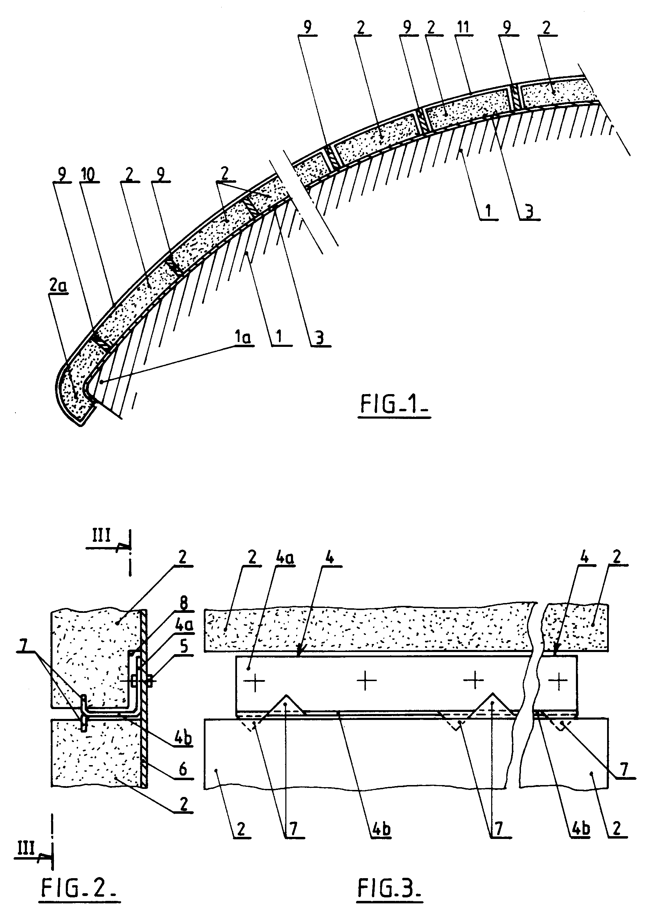

Sur la figure 1, on a représenté schématiquement en 1 une structure porteuse constituée par exemple par une partie d'une structure de bouclier thermique en forme de dôme dont la face externe est munie d'un dispositif de protection selon l'invention. La figure représente ladite structure suivant une coupe sagittale.

La structure porteuse 1 est par exemple une structure métallique ou une structure constituée d'un assemblage à âme en nid d'abeille éventuellement recouverte de tissu par exemple en carbone haut module, un tel assemblage étant notamment commercialisé par la Demanderesse sous la dénomination commerciale NIDA.

La partie de gauche de la figure 1 représente la zone périphérique du bouclier et la partie de droite la zone centrale.

Le revêtement selon l'invention rapporté sur la surface externe de la structure porteuse 1 est constitué d'un certain nombre de pavés individuels 2 réalisés dans un agrégat de carbone ou de silice.

Les pavés 2 n'ont pas nécessairement les mêmes formes et dimensions, ni la même nature, selon la forme du bouclier, notamment sa courbure et la zone d'implantation des pavés sur le bouclier.

Les agrégats de carbone ou de silice sont des matériaux connus, constitués de fibres de l'un des constituants ci-dessus, liées entre elles par un liant formé essentiellement du même constituant.

Préférentiellement, les fibres de carbone ou de silice ont un diamètre inférieur ou égal à 10 micromètres et une longueur inférieure ou égale à 700 micromètres.

Les fibres sont liées par un liant formé du même constituant et éventuellement d'une résine appropriée.

Les agrégats de carbone comportent des fibres liées entre elles essentiellement par du carbone, cependant que les agrégats de silice sont constitués de fibres de silice liées entre elles par un liant formé de silice et d'une résine formo-phénolique.

Pour la réalisation de tels matériaux, notamment les agrégats de silice, on peut avantageusement se référer au brevet FR-2.489.812 déposé au nom de la Demanderesse.

De préférence également, on utilisera, conformément à l'invention, des agrégats présentant une densité comprise entre environ 0,2 et environ 0,5.

De tels matériaux ont de remarquables propriétés de résistance thermique, sont poreux, présentent une rigidité suffisante pour garantir la géométrie de la surface externe des éléments réalisés dans ces matériaux, en particulier lors de la pénétration dans une atmosphère et peuvent être, par usinage ou moulage, aisément dimensionnés et conformés à volonté pour s'adapter à l'objet à recouvrir.

Sur le pourtour du bouclier, là où la courbure (1a) s'accentue notablement, les pavés 2a sont conformés en conséquence pour épouser la courbure.

Le taux de porosité des pavés 2,2a peut être extrêmement important et supérieur par exemple à 80% du volume des pavés.

Bien que la porosité importante de tels matériaux autorise une certaine circulation des gaz, ce qui est précisément recherché pour permettre l'évacuation, vers l'extérieur de l'objet muni dudit bouclier, des gaz engendrés lors de la phase de lancement, il a été constaté expérimentalement qu'il ne se produisait pas, à la rentrée dans l'atmosphère terrestre ou lors de la pénétration dans une autre atmosphère, d'élévation excessive de la température de la structure porteuse 1 due aux écoulements gazeux à très grande vitesse autour de l'objet.

La mise en forme aisée des pavés 2, 2a permet de leur donner sur leur face externe la forme la plus appropriée pour constituer une surface de freinage optimale, notamment dans la zone centrale du bouclier (partie de droite de la figure 1).

Les pavés 2,2a sont rapportés sur la structure porteuse 1 et fixés par collage, à la manière connue, à l'aide de colles à base de silicones notamment. On a représenté en 3 sur la figure 1 une telle couche de colle. La colle 3 est, d'une manière générale, soit pré-dégazée avant mise en oeuvre, soit dégazée après mise en oeuvre. Par ailleurs, la couche 3 n'est pas continue sur toute l'étendue de l'interface pavés-structure porteuse, mais des solutions de continuité sont ménagées dans la couche 3 de place en place pour conserver à l'ensemble pavés-structure porteuse la porosité requise.

La fixation par collage peut éventuellement être complétée par une fixation mécanique à l'aide par exemple de pattes ou griffes métalliques, telle qu'illustrée par les figures 2 et 3. Sur la figure 2 est représentée la fixation, connue en soi, de deux pavés adjacents 2 à l'aide d'une pièce en forme d'équerre 4.

La pièce en équerre 4 comprend une aile 4a permettant sa fixation, par exemple par des rivets 5 (figure 2), sur une plaque métallique 6 faisant partie de la structure porteuse et une aile 4b munie, de part et d'autre de son plan, de griffes 7 destinées à pénétrer dans la tranche de deux pavés 2 adjacents.

A hauteur de l'aile 4a, la face interne du pavé 2 est munie d'un évidement 8 réalisé par usinage, pour la réception de ladite aile 4a et des têtes des rivets 5, en sorte que les faces externes des pavés soient de niveau.

Les pavés 2,2a sont disposés côte à côte et à distance les uns des autres, l'intervalle 9 entre pavés étant rempli d'une colle identique à celle de la couche de fixation 3 et mise en place dans les mêmes conditions.

Dans le cas de pavés formés d'un agrégat de carbone, du fait de la tendance d'un tel matériau à l'effritement superficiel sous l'action des écoulements gazeux de long de la paroi du bouclier, il est préférable de traiter superficiellement les pavés. Un tel traitement anti-effritement peut être effectué par exemple par collage sur la face externe des pavés d'un film en matière plastique, à la manière connue, ledit film étant perforé afin de conserver à l'ensemble du dispositif de protection thermique la porosité requise.

Un tel film est représenté en 10 sur la partie gauche de la figure 1 et est mis en place après la fixation des pavés 2,2a sur la structure 1. Sur la partie droite de la figure 1, les pavés 2 sont également pourvus d'un tel film 11, mais celui-ci est mis en place sur les pavés avant leur fixation sur la structure, le film individuel 11 de chaque pavé 2 est appliqué en débordement sur les quatre faces latérales du pavé, le joint de colle 9 entre pavés étant en contact avec le film des pavés.

Les pavés 2,2a de carbone sont de préférence utilisés pour protéger thermiquement des boucliers ou autres structures porteuses de sondes, capsules ou autres objets ou véhicules spatiaux, susceptibles d'affronter des atmosphères non-oxydantes telles que celles rencontrées sur certaines planètes autres que la terre.

Dans des atmosphères oxydantes telles que l'atmosphère terrestre, le carbone ne peut être utilisé du fait des risques d'oxydation. Dans ce cas, les pavés seront réalisés en agrégat de silice.

Si la surface de la structure porteuse à protéger thermiquement est réduite, on peut ne prévoir qu'un seul pavé ou analogue adapté aux formes et dimensions requises.

D'une manière générale, la structure modulaire du revêtement selon l'invention permet de réaliser à l'avance des pavés, tuiles ou analogues de dimensions standard et d'opérer des contrôles de conformité avant la mise en place sur la structure porteuse.

La variété des matériaux disponibles permet un choix du type de matériau le plus approprié aux besoins.

C'est ainsi que sur un même bouclier par exemple, on peut prévoir non seulement des pavés ou analogues de configurations différentes mais de nature (carbone ou silice) différente selon la zone du bouclier.

Par ailleurs, la réparation de revêtements protecteurs thermiques selon l'invention, en cas par exemple de constatation de défaut ou de dégradation lors de la réalisation de la structure protectrice ou après utilisation, dans le cas de retour sur terre, est réalisée de manière relativement aisée et plus économique en intervenant localement pour remplacer le ou les pavés ou analogues, défectueux ou endommagés, ce qui évite la mise au rebut de toute la structure.

Les différents avantages d'une telle structure de revêtement thermique et poreux permettent ainsi d'obtenir un compromis optimal entre la masse d'un tel revêtement et son coût.

Enfin, l'invention n'est évidemment pas limitée aux modes de réalisation représentés et décrits ci-dessus, mais en couvre au contraire toutes les variantes couvertes par les revendications.

## Revendications

1. Dispositif de protection thermique d'un objet, en particulier un véhicule spatial, du type comprenant une structure porteuse (1) revêtue d'un matériau isolant thermique sous forme d'éléments monoblocs (2, 2a) rapportés sur ladite structure porteuse et constitués de fibres de carbone ou de silice, liées par un liant formé du même constituant et éventuellement d'une résine appropriée, caractérisé en ce que ledit matériau est un agrégat de fibres d'un diamètre inférieur ou égal à 10 micromètres et d'une longueur inférieure ou égale à 700 micromètres, ledit agrégat ayant une densité comprise entre 0,2 environ et 0,5 environ et en ce que lesdits éléments monoblocs (2, 2a) sont rapportés sur ladite structure porteuse (1), par l'intermédiaire d'une couche de colle de fixation (3) interposée de manière discontinue entre les faces internes desdits éléments (2, 2a) et la surface de la structure porteuse (1).

2. Dispositif suivant la revendication 1, caractérisé en ce qu'une colle de fixation (9) est disposée dans les intervalles entre lesdits éléments monoblocs.

3. Dispositif suivant la revendication 1 ou 2, caractérisé en ce que la face externe desdits éléments (2, 2a) reçoit un traitement anti-effritement.

4. Dispositif suivant la revendication 3, caractérisé en ce que le traitement anti-effritement est constitué par la fixation notamment par collage d'un film (10, 11) de matière plastique, perforé.

5. Dispositif suivant la revendication 4, caractérisé en ce que ledit film de matière plastique (10) est rapporté sur lesdits éléments (2, 2a), après mise on place de ces derniers sur ladite structure porteuse (1).

6. Dispositif suivant la revendication 4, caractérisé en ce que ledit film de matière plastique (11) est rapporté sur les éléments (2) avant mise en place de ces derniers sur ladite structure porteuse (1) et recouvre les flancs latéraux desdits éléments.

7. Dispositif suivant l'une des revendications 1 à 6, caractérisé en ce que lesdits éléments (2, 2a) sont fixés conjointement par collage (3) et mécaniquement, à l'aide de dispositifs à pattes ou griffes appropriées (4).

8. Bouclier de protection thermique de sonde, capsule ou analogues, dont la structure est réalisée conformément au dispositif selon l'une des revendications 1 à 7, la structure porteuse étant constituée notamment par un assemblage du type à nid d'abeille et revêtement de tissu en carbone.

## Claims

1. Thermal protection device for objects, in particular spacecraft, of the type comprising a load-bearing structure (1) covered by a thermal insulating material in the form of single block units (2, 2a), mounted onto the said load-bearing structure and formed from carbon or silica fibres, connected by a bonding material formed from the same constituent and, where necessary, a suitable resin, characterized in that the said material is an aggregate of fibres equal to or less than 10 micrometers in diameter and equal to or less than 700 micrometers in length, the said aggregate having a density between approximately 0.2 and approximately 0.5 and that the said single block units (2, 2a) are mounted onto the said load-bearing structure (1) by means of a layer of adhesive (3) which is applied in a discontinuous manner between the internal surfaces of the said elements (2, 2a) and the surface of the load-bearing structure (1).

2. Device as claimed in claim 1, characterized in that an adhesive (9) is disposed in the gaps between the said single block units.

3. Device as claimed in claims 1 or 2, characterized in that the external surface of the said elements (2, 2a) is subjected to an anti-weathering treatment.

4. Device as claimed in claim 3, characterized in that the anti-weathering treatment is constituted by the application, in particular by adhesion, of a film (10, 11) of perforated plastic material.

5. Device as claimed in claim 4, characterized in that the said film of plastic material (10) is attached to the said elements (2, 2a) after these have been placed on the said load-bearing structure (1).

6. Device as claimed in claim 4, characterized in that the said film of plastic material (11) is attached to the elements (2) before these are placed onto the said load-bearing structure (1) and that it covers the lateral sides of the said elements.

7. Device as claimed in one of the claims 1 to 6, characterized in that the said elements (2, 2a) are fixed both by means of adhesive (3) and mechanically by means of suitable fastening hooks or clamps (4).

8. Thermal shield for use on a probe, capsule or similar spacecraft, the structure of which is constructed in accordance with the device according to one of the claims 1 to 7, the load-bearing structure being formed in particular from a honeycomb type assembly, covered with carbon fibre material.

## Patentansprüche

1. Vorrichtung zum thermischen Schützen eines Objekts, insbesondere eines Raumfahrzeugs, des Typs umfassend eine Tragstruktur (1), die mit einem wärmeisolierenden Material in Form von Einblockelementen (2, 2a) bekleidet ist , die auf besagter Tragstruktur aufgebracht sind und aus Kohlenstoff- oder Siliciumoxidfasern gebildet werden, die mit einem Bindemittel aus der gleichen Komponente und gegebenenfalls einem geeigneten Harz verbunden sind, dadurch gekennzeichnet, daß besagtes Material ein Aggregat aus Fasern eines Durchmessers kleiner oder gleich 10 µm und einer Länge kleiner oder gleich 700 µm ist, wobei das Aggregat eine Dichte zwischen etwa 0,2 und etwa 0,5 aufweist, und daß besagte Einblockelemente (2, 2a) auf besagter Tragstruktur (1) unter Zwischenschaltung eine Klebstoffschicht (3) zur Befestigung aufgebracht ist, die diskontinuierlich zwischen den Innenflächen besagter Elemente (2, 2a) und der Oberfläche der Tragstruktur (1) eingefügt ist.

2. Vorrichtung nach Anspruch 1, dadurch gekennzeichnet, daß ein Kleber (9) zur Befestigung in den Zwischenräumen zwischen besagten Einblockelementen angeordnet ist.

3. Vorrichtung nach Anspruch 1 oder 2, dadurch gekennzeichnet, daß die Außenfläche besagter Elemente (2, 2a) eine Antiverwitterungsbehandlung empfängt.

4. Vorrichtung nach Anspruch 3, dadurch gekennzeichnet, daß die Antiverwitterungsbehandlung durch Befestigung, insbesondere Aufkleben einer perforierten Folie (10, 11) aus Plastikmaterial gebildet wird.

5. Vorrichtung nach Anspruch 4, dadurch gekennzeichnet, daß besagte Folie aus Plastikmaterial (10) auf besagten Elementen (2, 2a) aufgebracht ist, nachdem diese letzteren auf besagter Tragstruktur (1) aufgebracht sind.

6. Vorrichtung nach Anspruch 4, dadurch gekennzeichnet, daß besagte Folie aus Plastikmaterial (11) auf den Elementen (2, 2a) aufgebracht ist, bevor diese letzteren auf besagter Tragstruktur (1) aufgebracht sind, und die seitlichen Flanken besagter Elemente bedeckt.

7. Vorrichtung nach einem der Ansprüche 1 bis 6, dadurch gekennzeichnet, daß besagte Elemente (2, 2a) miteinander durch Kleben (3) und mechanisch mittels geeigneter Klauen oder Haken (4) befestigt sind.

8. Hitzeschild für eine Sonde, Kapsel od.dgl., deren Struktur entsprechend der Vorrichtung nach einem der Ansprüche 1 bis 7 realisiert ist, wobei die Tragstruktur insbesondere durch einen Verbund vom Bienenwabentyp und Kohlenstoffgewebeabdeckung gebildet wird.
